# EUROPÄISCHE PATENTSCHRIFT

(11) **EP 2 092 991 B1**
(45) Veröffentlichungstag und Bekanntmachung des Hinweises auf die Patenterteilung: **12.02.2014**
(21) Anmeldenummer: 09002333.4
(22) Anmeldetag: 19.02.2009
(51) Int. Cl.: B21D 5/02, G01B 5/24

(54) **Biegegesenk für eine Biegepresse, insbesondere Abkantpresse und Verfahren zum Abkanten eines Werkstücks**
Die for a bending press, in particular a press brake and method for bending a workpiece
Matrice à plier pour une presse à plier, notamment presse plieuse et procédé de pliage d'une pièce

(30) Priorität: 19.02.2008 AT 2662008
(43) Veröffentlichungstag der Anmeldung: 26.08.2009
(73) Patentinhaber: Trumpf Maschinen Austria GmbH & CO. KG., 4061 Pasching (AT)
(72) Erfinder: Theis, Helmut, 4540 Pfarrkirchen (AT)
(74) Vertreter: Ofner, Clemens

(56) Entgegenhaltungen:
- EP-A1- 1 083 403
- DE-B4- 4 042 732
- JP-A- 9 029 340
- JP-A- 60 247 415

## Beschreibung

Die Erfindung betrifft ein Biegegesenk wie es im Oberbegriff des Anspruches 1 beschrieben ist sowie ein Verfahren gemäß dem Oberbegriff des Anspruches 8.

Aus der WO 96/41690 A1 ist ein Verfahren zum Abkanten von Werkstücken sowie eine Bearbeitungsmaschine zur Durchführung des Verfahrens bekannt. Ein Biegestempel ist mit Tastelementen versehen, mit denen eine Ist-Größe des Biegewinkels und dessen Änderung fortlaufend ermittelt wird und die ermittelte Ist-Größe des Biegewinkels mit einer Soll-Größe in einer Vergleichsvorrichtung verglichen wird und bei einer Abweichung Steuerfunktionen für einen Verstellantrieb der Bearbeitungsmaschine zur Korrektur des Biegewinkels generiert werden.

Aus der DE 30 08 701 A1 ist eine Winkelmessvorrichtung für Abkantpressen bekannt, bei der ein Biegestempel eine gehäuseartige Aufnahme aufweist in der ein relativ zum Biegestempel und in Verstellrichtung des Biegestempels verstellbares Tastelement angeordnet ist, welches in unbelasteter Stellung durch die Wirkung einer Federanordnung in einer Stellung positioniert ist bei der eine Tastfläche des Tastelements fluchtend mit einer Biegekante des Biegestempels ausgerichtet und die Tastfläche zur Biegekante exzentrisch angeordnet ist. Bei einem Umformvorgang eines Werkteils erfolgt durch Beaufschlagung durch einen Biegeschenkel ein Einfahren des Tastelements in die Aufnahme, wobei durch Messung des Eintauchweges die Ist-Größe des Biegewinkels des Werkteils während des Umformvorganges kontrolliert wird.

Aus dem weiteren Dokument DE 20 44 199 A1 ist ein Verfahren und eine Vorrichtung zum gesteuerten oder selbsttätigen Freibiegen von Blechstücken zwischen einem Biegegesenk und einem Biegestempel bei kraftgebundenen Pressen bekannt. Die Verstellung des Biegestempels ist an jeder Stelle eines Gesamtverstellweges unterbrechbar. Außerhalb des Stempels ist ein Messwerk mit zumindest einem Tastelement angeordnet, welches von zumindest einem Biegeschenkel des Werkteils beim Umformvorgang beaufschlagt wird und wobei über einen ermittelten Messwert der Verstellung des Tastelements der Ist-Biegewinkel ermittelt wird.

Weiter ist aus der EP 0 166 351 eine Vorrichtung an einer Maschine für Umformarbeiten an blechförmigen Materialien mit Rückfederungseigenschaften bekannt, bei der ein Sensor beim Biegevorgang den Betrag und die Richtung der Biegung des blechförmigen Materials und/oder beim Öffnen des Werkzeuges aus seiner Soll-Position den Betrag und die Richtung der Rückfederung des vom Werkzeug entlasteten blechförmigen Materials erfasst. In einer elektronischen Schaltung wird unter Berücksichtigung der Materialkennwerte des blechförmigen Materials und des Werkzeuges sowie der detektierten Biegung und Rückfederung ein Signal für die Soll-Position des Werkzeuges erzeugt und gespeichert und auf Stellglieder gegeben, welche das Werkzeug in die Soll-Position zur Erzielung des Soll-Winkels verstellen.

Aus DE 40 42 732 B4 oder JP 60 247415 A ist weiters jeweils ein Biegegesenk für eine Abkantpresse mit einer Auflagefläche für ein Werkteil und einer V-Nut, in die ein umzuformendes Werkstück mittels eines Biegestempels hineingedrückt werden kann bekannt. Das Biegegesenk umfasst dabei zur Bestimmung eines Winkels zwischen den Schenkeln des umgeformten Werkteiles eine Messeinrichtung, die im Bereich der V-Nut angeordnete Erfassungsmittel für die Positionsänderung eines Werkteilbereiches relativ zum Biegegesenk aufweist. Das Biegegesenk umfasst weiters einen mit einer Steuereinrichtung der Biegepresse leitungsverbundenen Messwergeber für die erfassten Ist-Daten.

Aufgabe der Erfindung ist es, ein Biegegesenk für eine Biegepresse, insbesondere Abkantpresse sowie ein Verfahren zum Betrieb der Biegepresse für eine fortlaufende Winkelüberwachung während eines Umformvorganges eines Werkteils zu schaffen mit der bzw. mit dem eine Abweichung zwischen einem Soll-Biegewinkel und einem Ist-Biegewinkel unmittelbar an einem Biegegesenk, bei minimaler Störkontur durch eine Messeinrichtung, erreicht wird.

Die Aufgabe der Erfindung wird durch ein Biegegesenk mit den Merkmalen des Anspruches 1 gelöst, wodurch eine vollständige Integration der Messeinrichtung mit einem Erfassungsmittel und einem Messwertgeber im Biegegesenk, die Erfassung von Daten für eine fortlaufende Winkelmessung im unmittelbaren Abkantbereich, damit eine hohe Messgenauigkeit und die Erfassung einer Relativbewegung eines Werkstückbereiches im Bereich der Einzugskulisse des Biegegesenkes erreicht wird.

Möglich ist dabei eine Ausbildung nach Anspruch 2, wodurch ein geringer Reibungswiderstand und damit sichere Übertragung der Relativbewegung des Werkstücks auf das Erfassungsmittel und damit eine exakte Erfassung des Winkels für die Steuerung der Verstellbewegung des Biegestempels erreicht wird.

Gemäß der in Anspruch 3 beschriebenen vorteilhaften Weiterbildung wird eine das Messergebnis negativ beeinflussende Relativbewegung zwischen dem Werkteilbereich und dem Erfassungsmittel wirkungsvoll verhindert.
Durch die vorteilhaften Ausbildungen wie sie in Anspruch 6 beschrieben sind, werden exakte Ist-Daten für eine fortlaufende Winkelmessung während des Umformvorganges erreicht.

Die im Anspruch 5 beschriebene weitere vorteilhafte Ausbildung gewährleistet eine Verfeinerung des Messergebnisses, da ein Durchschnittsmesswert zweier Messergebnisse gebildet wird falls es beim Biegeumformen beim Einzug des Werkteils in die V-Nut zu unterschiedlichen Relativbewegungen der Werkteilbereiche an den gegenüber liegenden Einzugskulissen der V-Nut kommt.

Schließlich sind auch Ausbildungen nach den Ansprüchen 6 und 7 vorteilhaft, weil damit eine unmittelbare Übertragung einer Bewegung des Erfassungsmittels auf dem Messwertgeber erfolgt und damit Übertragungsfehler bei Einsatz eines Übertragungsmittels auftreten können, wirkungsvoll vermieden werden.

Die Erfindung betrifft aber auch ein Verfahren, wie es im Oberbegriff des Anspruches 8 beschrieben ist.

Aufgabe des Verfahrens ist es, einen Verstellvorgang eines Biegestempels einer Biegepresse ausgehend von einer fortlaufenden Erfassung eines Ist-Wert eines Winkels während eines Umformvorganges zu steuern.
Diese Aufgabe der Erfindung wird bei einem gattungsgemäßen Verfahren durch die im Kennzeichenteil des Anspruches 8 wiedergegebenen Maßnahmen erreicht. Der überraschende Vorteil dabei ist, dass eine hohe Winkelgenauigkeit der Umformung bei Minimierung der Zykluszeit unabhängig von den von Werkteil zu Werkteil variierenden Materialeigenschaften erreicht wird.

Schließlich sind aber auch Maßnahmen, wie sie im Anspruch 9 beschrieben sind, vorteilhaft wodurch ein unterschiedliches Rückfederungsverhalten, wie es ebenfalls Materialbedingt unterschiedlich ist, unmittelbar berücksichtigt wird und damit unabhängig davon ein qualitativ hochwertiger Umformvorgang erreicht wird.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes Biegegesenk mit einer Messeinrichtung, geschnitten gemäß den Linien II in Fig. 2;
- Fig. 2: das Biegegesenk nach Fig. 1 in Draufsicht;
- Fig. 3: ein Detailausschnitt des erfindungsgemäßen Biegewerkzeuges nach Fig. 1;
- Fig. 4: eine Ausbildung eines gattungsgemäßen Biegegesenkes mit der Messeinrichtung, geschnitten;
- Fig. 5: eine andere Ausbildung eines gattungsgemäßen Biegegesenkes mit der Messeinrichtung, geschnitten;
- Fig. 6: eine weitere Ausbildung des erfindungsgemäßen Biegegesenkes mit der Messeinrichtung, geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

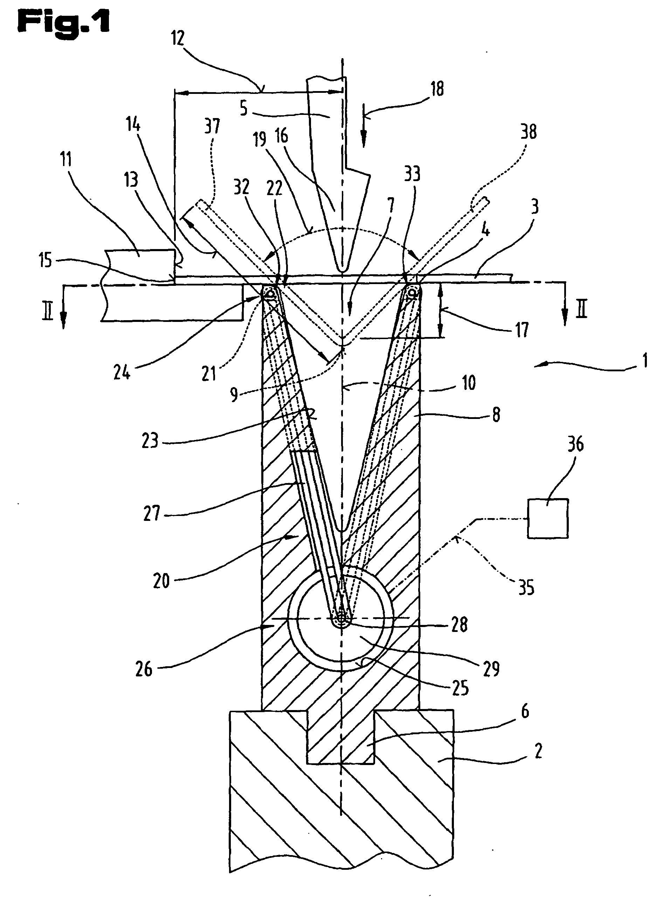

In der Fig. 1 bis 3 ist ein Biegegesenk 1, aufgenommen in einer Werkzeugaufnahme 2 einer nicht weiter im Detail dargestellten Biegepresse zum freien Biegeformen einer Abkantung an einem Werkteil 3 mittels eines relativ zum Biegegesenk 1 und dem auf einer Auflagefläche 4 des Biegegesenks 1 aufliegenden Werkteil 3 verstellbaren Biegestempel 5 gezeigt. Das Biegegesenk 1 weist zur Befestigung in der Werkzeugaufnahme 2 einen Gesenkfuß 6 und einen mit diesem einstückig verbundenen mit einer V-Nut 7 versehenen Gesenkkopf 8 auf.

Zur Positionierung des Werkteils 3 für eine vorgesehene Biegekante 9, wie an dem umgeformten und in unterbrochenen Linien Werkteil 3 gezeigt, im Bezug auf eine Biegeebene 10, ist bevorzugt ein in drei Raumrichtungen verstellbarer Anschlag 11 vorgesehen. Mittels des Anschlages 11 und einer gewählten Distanz 12 einer Anschlagfläche 13 des Anschlages 11 zur Biegeebene 10 ist eine vorgesehene Schenkellänge 14 für die Abkantung festlegbar, wie auch durch den Anschlag 11 eine exakte parallele Ausrichtung der Biegekante 10 zu einer Stirnseitenfläche 15 des Werkteils 3 erreicht wird.

Selbstverständlich ist es auch möglich, durch die Anwendung von zwei zueinander beabstandeter Anschläge 11 und bei einer Einstellung dieser Anschläge in unterschiedlichen Distanzen 12 zur Biegeebene 10 ein winkeliger Verlauf der Biegekante 9 zur Stirnseitenfläche 15 möglich ist.
Zur Vornahme des Abkantvorganges wird der Biegestempel 5 bzw. ein schwertartiger Stempelfortsatz 16 um eine Eindringtiefe 17 - gemäß Pfeil 18 - in die V-Nut 7 verstellt. In Abhängigkeit der Einbringtiefe 17 wird ein vorgegebener Winkel 19 der Abkantung erreicht.

Zur Messung des Winkels 19 ist das Biegegesenk 1 im Gesenkkopf 8 mit einer Messeinrichtung 20 versehen.

Im gezeigten Ausführungsbeispiel ist ein Rollenelement 21 im Bereich einer gerundeten Einzugskulisse 22 im Übergang der Auflagefläche 4 und einer Seitenfläche 23 der V-Nut 7 angeordnet das um eine Achse drehbar gelagert ist. Das Rollenelement 21 bildet ein Erfassungsmittel 24 der Messeinrichtung 20 für eine Bewegung des Werkteils 3 relativ zum Biegegesenk 1 während des Biegevorganges zur Bildung der Abkantung.

Nach dem bevorzugten Ausführungsbeispiel ist in einer von der V- Nut 7 beabstandeten Ausnehmung 25 ein Messwertgeber 26 angeordnet der mit dem Rollenelement 21 über ein endloses, schnurförmiges Übertragungsmittel 27 zur Übertragung einer Drehbewegung des Rollenelementes 21 auf den Messwertgeber 26 antriebsverbunden ist. Den Messwertgeber 26 bildet ein Drehwinkelsensor 29 mit einem achs- oder scheibenförmigen Stellelement 28 für das Übertragungsmittel 27.

Das Übertragungsmittel 27 zwischen dem Rollenelement 21 und dem Stellelement 28 verläuft in einer Nut 30 die sich längs der Seitenfläche 23 von der Auflagefläche 4 bis zur Ausnehmung 25 erstreckt.

Eine zylindrische Rollfläche 31 des Rollenelements 21 weist einen Radius 32 auf, der etwa einem Rundungsradius 33 der Einzugskulisse 22 entspricht und wird gering überragt von dem in einer Nut des Rollenelements 21 laufenden Übertragungsmittel 27 das aus einem rutschfesten Material besteht.

Selbstverständlich kann auch die Rollfläche 31 des Rollenelements 21 ist mit einer rutschfesten Beschichtung versehen sei bzw. besteht das Rollenelement 21 aus einem Material das einen hohen Reibungskoeffizienten aufweist.

Diese Ausbildungen gewährleisten eine gleitfreie Übertragung der Relativbewegung zwischen dem Werkteil 3 und dem Biegegesenk 8 im Bereich der Einzugskulisse 22 während des Biegevorganges zur Bildung des Winkels 19 auf das durch das Rollenelement 21 gebildete Erfassungsmittel 24 und über das Übertragungsmittel 27 an den Drehwinkelsensor 29. Die Relativbewegung des Werkteils 3 an der Einzugskulisse 22 bewirkt eine Drehbewegung des Rollenelements 21 um einen Drehwinkel 34 der vom Drehwinkelsensor 29 als Messwertgeber 26 detektiert und als Messwert über eine Leitung 35 an eine Steuereinrichtung 36 der Biegepresse zugeleitet wird.

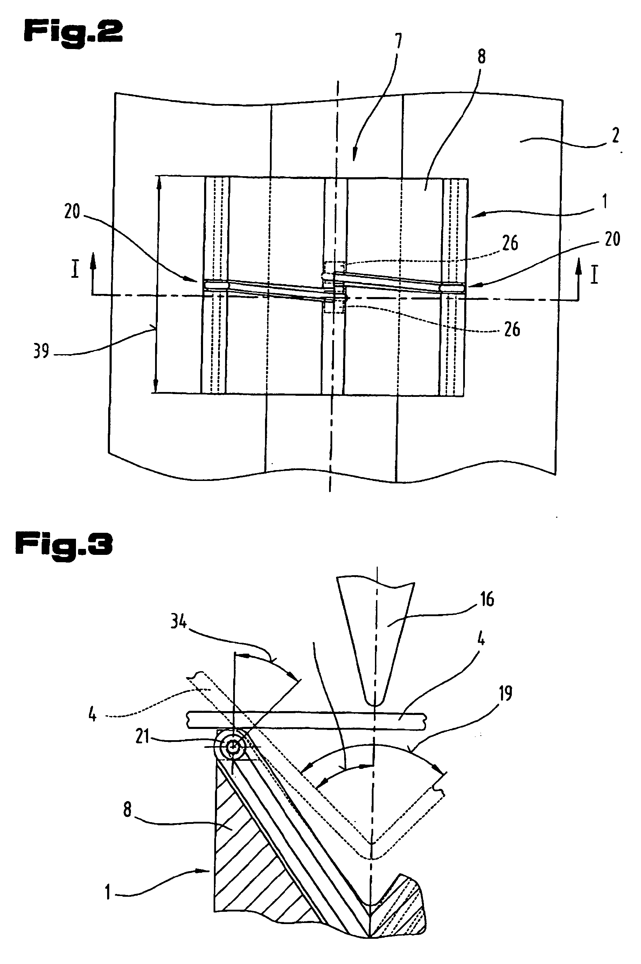

Wie nun insbesondere aus der Fig. 3 zu entnehmen, wird durch die Messung und der Erfassung des Drehwinkels 34 des Rollenelements 21, gemäß dem geometrischen Grundsatz der Schenkelnormalen und aus der Summe von 180° von Innenwinkeln eines Dreiecks mit einem der Innenwinkel von 90°, der halbe Winkel 19 zwischen Schenkeln 37, 38 des gekanteten Werkteils aus 180° minus 90° abzüglich dem Drehwinkel 34 ermittelbar und damit der Biegevorgang kontrollierbar.

Wie weiter der Fig. 2 zu entnehmen, sind nach einer vorteilhafte Ausbildung zwei Messvorrichtungen 20 im Biegegesenk 8 vorgesehen, wobei jeder der symmetrisch zur Biegeebene 10 angeordneten Einzugskulissen 22 das Rollenelement 21 als Erfassungsmittel 24 zugeordnet ist, das mit dem Übertragungsmittel 27 mit jeweils einen Messwertgeber 26 zum Messen des Drehwinkels 34 antriebsverbunden ist.

Mittels zweier Messeinrichtungen 20 ist es möglich, Abweichungen des Winkels 19 von einem vorgegebenen Winkelmaß bei einer möglicherweise auftretenden exzentrischen Abweichung der Biegekante 9 von der Biegeebene 10 durch Erfassung unterschiedlicher Relativbewegungen im Bereich der zur Biegeebene 10 symmetrisch angeordneten Einzugskulissen 22 und durch Bildung eines Mittelwertes der gemessenen unterschiedlichen Drehwinkeln 34 und durch Korrektur der Verstellbewegung des Biegestempels 5 auszugleichen.

Bevorzugt sind bei einer derartigen Ausbildung die beiden Messeinrichtungen 20 im Gesenkkopf 8 im Bezug auf eine Länge 39 des Biegegesenks 1 versetzt und mit entgegen gesetzter Lage der Messwertgeber 26 angeordnet.

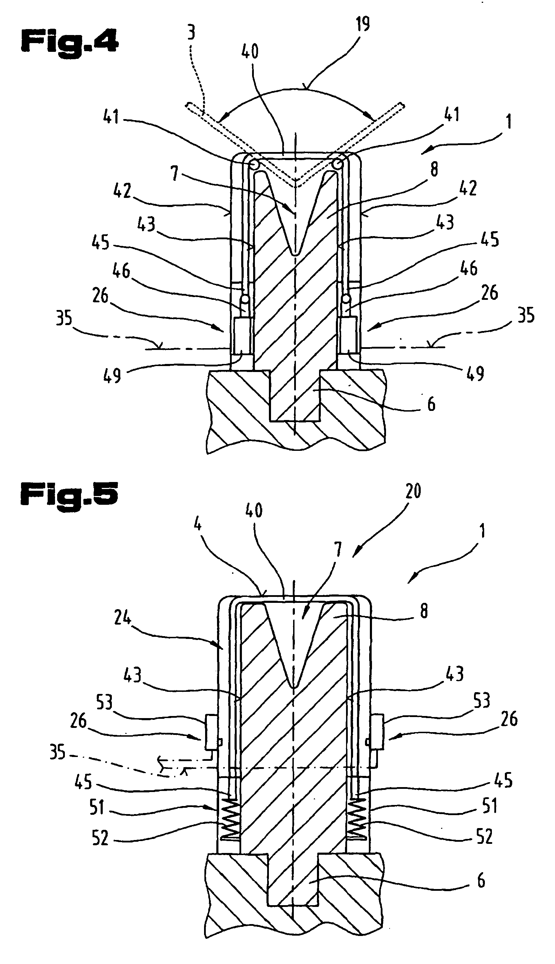

In der Fig. 4 ist eine gattungsgemäße, jedoch nicht erfindungsgemäße Ausführungsform des Biegegesenkes 1 mit der Messeinrichtung 20 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Bei dieser Ausführung ist das Erfassungsmittel 24 für eine fortlaufende Messung und Überwachung des Biegewinkels 19 ein elastisches Band 40 das die V-Nut 7 im Gesenkkopf 8 überspannt und über beidseits der V-Nut 7 im Bereich der Einzugskulisse 7 angeordnete Umlenkelemente 41 z.B. Zylinderstifte geführt ist. Im weiteren Verlauf ist das Band 40 längs entgegen gesetzten Seitenflächen 42 des Biegegesenks 1, z.B. in schlitzförmigen Nuten 43 in Richtung des Gesenkfußes 8 geführt. Enden 45 des Bandes 40 sind an Stellmitteln 46 von in Ausnehmungen 47 der Seitenflächen 42 angeordneten Kraftmesssensoren 49 als Messwertgeber 26 befestigt.

Durch die Relativbewegung des Werkteils 3 gegenüber dem Biegegesenk 1 bei einem Biegevorgang zur Bildung des Winkels 19 wird das Band 40 vom Werkteil 3, wie in unterbrochenen Linien gezeigt, entgegen einer elastischen Rückstellkraft in die V-Nut 7 eingezogen. Die Rückstellkraft, welche linear mit der bewirkten Dehnung steigt, wird mit den Kraftmesssensoren 49 gemessen und die Messwerte über die Leitungen 35 der nicht weiter dargestellten Steuereinrichtung der Biegepresse zugeleitet.

Bei Abnahme des Werkteils 3 vom Biegegesenk 1, nach erfolgter Umformung, nimmt das Band 40 infolge der elastischen Rückstellkraft seine, die V-Nut 7 geradlinig überspannende, Stellung und damit Ursprungsstellung ein was auch zur Folge hat, dass der von den Kraftmesssensoren 49 ermittelte Messwert auf einen Ausgangsreferenzwert für einen nachfolgenden Biegevorgang rückgeführt wird.

In der Fig. 5 ist eine gattungsgemäße, jedoch nicht erfindungsgemäße Ausführungsform des Biegegesenkes 1 mit der Messeinrichtung 20 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.
Bei dieser Ausführung ist das Band 40 als das Erfassungsmittel 24 biegeelastische, jedoch nicht dehnbare ausgebildet. Wie bereits in der vorhergehenden Figur beschrieben überspannt es die V-Nut 7 und führt in den seitlich verlaufenden Nuten 43 des Gesenkkopfes 8 in Richtung des Gesenkfußes 6. Die Umlenkung des Bandes erfolgt durch Ausformung der Nuten 43 im Bereich der Auflagefläche 4 des Gesenkkopfes 8. Umlenkmittel wie z. B. Rollenelemente oder Stifte sind in diesen gezeigten Ausführungsbeispiel nicht vorgesehen. Die Enden 45 des Bandes 40 sind über federelastische Widerlager 51, z.B. Spiralfedern 52, mit dem Biegegesenk 1 verbunden.

Wie bereits in der vorhergehenden Figur beschrieben, wird bei dieser Ausführung ebenfalls der die V-Nut 7 überspannende Bereich des durch das Band 40 gebildeten Erfassungsm9ittels 24 der Messvorrichtung 20 bei der Umformung und der damit verbundenen Relativbewegung des Werkteils 3 zur Ausbildung des Winkels 19 in den Bereich der V-Nut 7 mit eingezogen wobei eine Auffederung der Spiralfedern 52 erfolgt.

Die damit verbundene Stellbewegung des Bandes 40, z.B. im Bereich der seitlichen Nuten 43 wird nunmehr durch diesen Bandbereichen zugeordnete Wegmesssensoren 53 als Messwertgeber 26, die über die Leitungen 35 mit der nicht weiter dargestellten Steuereinrichtung der Biegepresse leitungsverbunden sind, detektiert und an diese als Messwert geleitet.

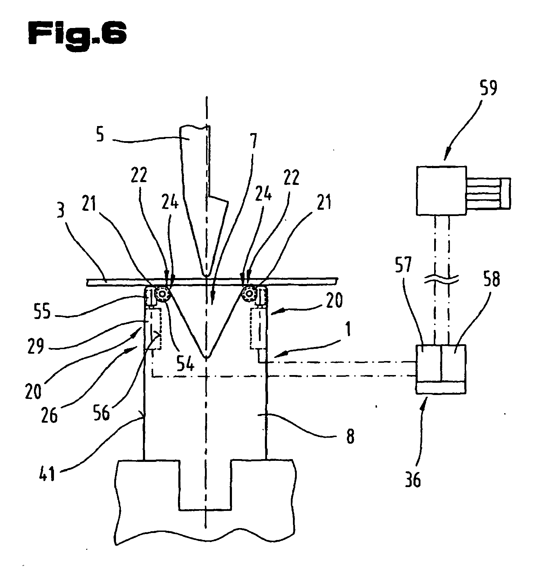

In der Fig. 6 ist eine weitere und gegebenenfalls für sich eigenständige Ausführungsform des Biegegesenkes 1 mit der Messeinrichtung 20 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Die in dieser Fig. gezeigte weitere Ausbildung des Biegegesenks 1 mit der Messeinrichtung 20 zur Feststellung einer Relativbewegung zwischen dem Werkteil 3 und dem Biegegesenks 1 weist im Bereich der Einzugskulissen 22 der V-Nut 7, wie bereits in der Fig. 1 beschrieben, die drehbaren Rollenelemente 21 auf und sind diese unmittelbar die Erfassungsmittel 24 der Messeinrichtung 20. Die bei einer Relativbewegung des Werkteils 3 bei seiner Umformung zur Bildung des Winkels 19 bewirkte Drehbewegung der Rollenelemente 21 wird dabei z.B. über ein Schneckenrad 54 und Schnecke 55 auf einen als Messwertgeber 26 in einer Ausnehmung 56 der Seitenfläche 42 angeordneten Drehwinkelsensor 29 übertragen und der dem jeweiligen Drehwinkel entsprechende Messwert aan die nicht weiter gezeigte Steuereinrichtung der Biegepresse übertragen.

Eine derartige Ausbildung ist insbesondere aufgrund eines fertigungstechnisch und durch eine geringe Anzahl von Komponenten minimierten Aufwandes und durch Entfall von weiteren Übertragungsmitteln vorteilhaft, besonders dann, wenn die Einzugskulissen 22 einen größeren Radius aufweisen können und damit auch die Rollenelemente mit einem größeren Durchmesser versehen sein können.

Nach dem erfindungsgemäßen Verfahren zur Winkelbestimmung während des Umformvorganges zur Bildung einer Abkantung mit einem vorgegebenen Winkel 19 an einem Werkteil 3 ist im Biegegesenk 1 die Messeinrichtung 20 integriert angeordnet. Diese besteht aus zumindest einem Erfassungsmittel 24 und einem Messwertgeber 26 von dem fortlaufend während des Umformvorganges Messdaten an die Steuereinrichtung 36 der Biegepresse geleitet werden. Während eines Verstellvorganges des Biegestempels 5 aus einer ersten Stellung bei der der Biegestempel 5 auf den Werkteil 3 aufsetzt und einer zweiten Stellung in der der Biegestempel 5 in der V- Nut 7 des Biegegesenkes 1 eingreift erfolgt eine Relativbewegung des Werkteils 3 bzw. eines Werkteilbereiches gegenüber einer Referenzposition am Biegegesenk 1. Diese Relativbewegung während des Verstellvorganges des Biegestempels 5 wird vom Erfassungsmittel 24, das bevorzugt im Bereich der Einzugskulisse 22, also im Übergang der Auflagefläche 4 zur V- Nut 7, angeordnet ist, detektiert und vom zugeordneten Messwertgeber 26 der Messwert generiert. Dabei handelt es sich um Ist- Daten für die Winkelbestimmung die in einem Datenspeicher 57 der Steuereinrichtung 36 mit hinterlegten winkelbezogenen Soll- Daten verglichen werden. In Abhängigkeit eines Soll/Ist- Vergleiches in einem Prozessor 58 der Steuereinrichtung 36 werden Steuersignale für die Ansteuerung einer Antriebsvorrichtung 59 der Biegepresse für die Verstellung des Biegestempels 5 aus der ersten Stellung in die zweite Stellung gebildet und der Verstellvorgang solange vorgenommen bis die Ist- Daten den Soll- Daten entsprechen und damit der vorgegebene Winkel 19 erreicht ist.

Das Verfahren ermöglicht aber auch ein material- oder werkteilbezogenes Rückfederungsverhalten zu erfassen und unmittelbar während des Umformvorganges auszugleichen. Dazu erfolgt nach dem Erreichen der Übereinstimmung von Ist- und Soll- Daten eine in einer Zeitdauer festgelegte Entlastungsphase, in der die Kraftaufbringung durch den Biegestempel 5 auf den Werkteil 3 unterbrochen wird. Ein im Anschluss daran vorgenommener neuerlicher Ist-Soll- Datenvergleich zeigt eine eventuelle Rückfederung und auch deren Auswirkungen auf den Winkel 19 auf. Dieser Soll/Ist- Datenvergleich wird zur Bildung eines Korrekturfaktors herangezogen und damit ein das Rückfederverhalten berücksichtigender neuer Soll- Datenwert, beispielsweise für eine Serienfertigung, gebildet.

Der Ordnung halber sei abschließend darauf hingewiesen, dass zum besseren Verständnis des Aufbaus des Biegegesenkes 1 dieses bzw. dessen Bestandteile teilweise unmaßstäblich und/oder vergrößert und/oder verkleinert dargestellt wurden.

### Bezugszeichenaufstellung

- 1: Biegegesenk
- 2: Werkzeugaufnahme
- 3: Werkteil
- 4: Auflagefläche
- 5: Biegestempel
- 6: Gesenkfuß
- 7: V-Nut
- 8: Gesenkkopf
- 9: Biegekante
- 10: Biegeebene
- 11: Anschlag
- 12: Distanz
- 13: Anschlagfläche
- 14: Schenkellage
- 15: Stirnseitenfläche
- 16: Stempelfortsatz
- 17: Eindringtiefe
- 18: Pfeil
- 19: Winkel
- 20: Messeinrichtung
- 21: Rollenelement
- 22: Einzugskulisse
- 23: Steinfläche
- 24: Erfassungsmittel
- 25: Ausnehmung
- 26: Messwertgeber
- 27: Übertragungsmittel
- 28: Stellelement
- 29: Drehwinkelsensor
- 30: Nut
- 31: Rollfläche
- 32: Radius
- 33: Rundungsradius
- 34: Drehwinkel
- 35: Leitung
- 36: Steuerungseinrichtung
- 37: Schenkel
- 38: Schenkel
- 39: Länge
- 40: Band

- 41: Umlenkelement
- 42: Seitenfläche
- 43: Nut
- 44:
- 45: Ende
- 46: Stellmittel
- 47: Ausnehmung
- 48:
- 49: Kraftmesssensor
- 50:
- 51: Widerlager
- 52: Spiralfeder
- 53: Wegmesssensor
- 54: Schneckenrad
- 55: Schnecke
- 56: Ausnehmung
- 57: Datenspeicher
- 58: Prozessor
- 59: Antriebsvorrichtung

## Patentansprüche

1. Biegegesenk (1) für eine Biegepresse, insbesondere Abkantpresse, mit einem Gesenkfuß (6) zum Spannen in einer Werkzeugaufnahme (2) eines Pressenbalkens der Biegepresse und mit einem eine Auflagefläche (4) für einen Werkteil (3) ausbildenden und eine V- Nut (7) aufweisenden Gesenkkopf (8) und mit einer Messeinrichtung (20) zur Bestimmung eines Winkels (19) zwischen Schenkeln (37, 38) des umgeformten Werkteils (3), wobei die Messeinrichtung (20) durch zumindest ein im Bereich einer Einzugskulisse (22) der V- Nut (7) angeordnetes Erfassungsmittel (24) und zumindest einem mit einer Steuereinrichtung (36) der Biegepresse leitungsverbundenen Messwertgeber (26) für Ist- Daten einer Positionsänderung eines Werkteilbereiches relativ zum Biegegesenk (1) gebildet ist und das Erfassungsmittel (24) durch ein mit einer Rollfläche (31) einen Teilbereich der Einzugskulisse (22) der V- Nut (7) ausbildendes Rollenelement (21) gebildet ist, **dadurch gekennzeichnet, dass** dem Rollenelement (21) ein Drehwinkelsensor (29) als Messwertgeber (26) zugeordnet ist.

2. Biegegesenk (1) nach Anspruch 1, **dadurch gekennzeichnet, dass** das Rollenelement (21) um eine parallel zu einer Biegeebene (10) ausgerichtete Achse drehbar im Gesenkkopf (8) gelagert ist.

3. Biegegesenk (1) nach einem der vorhergehenden Ansprüche, **dadurch gekennzeichnet, dass** das Rollenelement (21) oder die Rollfläche (31) des Rollenelements gleitfest ausgebildet ist.

4. Biegegesenk (1) nach einem der vorhergehenden Ansprüche, **dadurch gekennzeichnet, dass** das Rollenelement (21) oder die Achse des Rollenelements (21) mit dem Messwertgeber (26) antriebsverbunden ist.

5. Biegegesenk (1) nach einem der vorhergehenden Ansprüche, **dadurch gekennzeichnet, dass** im Biegegesenk (1) beidseits der V- Nut (7) je ein Rollenelement (21) angeordnet ist

6. Biegegesenk (1) nach einem der vorhergehenden Ansprüche, **dadurch gekennzeichnet, dass** das Rollenelement (21) als Drehwinkelsensor (29) ausgebildet ist.

7. Biegegesenk (1) nach einem der vorhergehenden Ansprüche, **dadurch gekennzeichnet, dass** das Rollenelement (21) mit dem Drehwinkelsensor (29) über einen Schneckentrieb antriebsverbunden ist.

8. Verfahren zum Abkanten von Werkteilen (3) zwischen einem eine V- Nut (7) aufweisenden Biegegesenk (1) und einem relativ dazu verstellbaren Biegestempel (5) einer Biegepresse, insbesondere Abkantpresse, und mit einer Messeinrichtung (20) für eine fortwährende Bestimmung eines Winkels (19) zwischen Schenkel (37, 38) des Werkteils (3) während eines Verstellvorganges des Biegestempels (5) aus einer ersten Stellung bei der der Biegestempel (5) auf den Werkteil (3) aufsetzt und einer zweiten Stellung in der der Biegestempel (5) in die V- Nut (7) des Biegegesenkes (1) eingreift und bei der der Werkteil (3) winkelig umgeformt ist, wobei die Messeinrichtung (20) im Biegegesenk (1) angeordnet ist und zumindest ein Erfassungsmittel (24) und einen Messwertgeber (26) zum Erfassen einer Positionsänderung eines Werkteilbereiches relativ zu einer Referenzposition am Biegegesenk während des Verstellvorganges des Biegestempels (5) aufweist und Positions- Ist- Daten in einem Datenspeicher (57) der Steuereinrichtung (36) hinterlegten winkelbezogenen Positions- Soll- Daten verglichen werden und in Abhängigkeit eines Soll/Ist- Vergleiches in einem Prozessor (58) der Steuereinrichtung (36) Steuersignale generiert und an eine Antriebsvorrichtung (59) der Biegepresse für eine Verstellung des Biegestempels (5) in die zweite Stellung geleitet werden bis die Ist- Daten den Soll- Daten angeglichen sind und wobei das Erfassungsmittel (24) durch ein mit einer Rollfläche (31) einen Teilbereich der Einzugskulisse (22) der V- Nut (7) ausbildendes Rollenelement (21) gebildet ist, **dadurch gekennzeichnet, dass** dem Rollenelement (21) ein Drehwinkelsensor (29) als Messwertgeber (26) zugeordnet ist und eine Drehbewegung des Rollenelements (21) um einen Drehwinkel (34) vom Drehwinkelsensor (29) detektiert und als Messwert über eine Leitung (35) an eine Steuereinrichtung (36) der Biegepresse zugeleitet wird.

9. Verfahren nach Anspruch 8, **dadurch gekennzeichnet, dass** nach dem Erreichen der Übereinstimmung von Ist- und Soll- Daten eine in einer Zeitdauer festgelegte Entlastungsphase, in der die Kraftaufbringung durch den Biegestempel (5) auf den Werkteil (3) unterbrochen wird, erfolgt und im Anschluss daran ein neuerlicher Ist- Soll- Datenvergleich vorgenommen wird und eine durch eine Rückfederung des Werkteils (3) bedingte Abweichung der Ist- Daten von den Soll- Daten durch Bildung eines Korrekturfaktors für die Soll- Daten berücksichtigt wird und in Abhängigkeit eines Soll/Ist-Vergleiches mit entsprechend dem Korrekturfaktor bestimmten neuen Soll- Daten vom Prozessor (58) der Steuereinrichtung (36) Steuersignale generiert und an eine Antriebsvorrichtung (59) der Biegepresse für eine Verstellung des Biegestempels (5) in die zweite Stellung geleitet werden bis die Ist- Daten den korrigierten Soll- Daten angeglichen sind.

## Claims

1. Die (1) for a bending press, in particular press brake, comprising a die base (6) for clamping into a tool holder (2) of a pressing beam of the bending press, and comprising a die head (8) forming a contact face (4) for a workpiece (3) and having a V-shaped groove (7), and comprising a measuring device (20) for determining an angle (19) between legs (37, 38) of the deformed workpiece (3), and the measuring device (20) is formed from at least one detection means (24) arranged in the region of one opening (22) of the V-shaped groove (7) and at least one measured value encoder (26) being line connected with a control device (36) of the bending press for actual data of a change of position of a region of the workpiece relative to the die (1) and the detection means (24) is formed from a roller element (21) which together with a roller area (31) forms a section of the opening (22) of the V-shaped groove (7), **characterized in that** as measured value encoder (26), an angle sensor (29) is associated with the roller element (21).

2. Die (1) according to claim 1, **characterized in that** the roller element (21) is mounted inside the die head (8) to be rotatable around an axis aligned parallel to a bending plane (10).

3. Die (1) according to one of the preceding claims, **characterized in that** the roller element (21) or the roller area (31) of the roller element is designed to be slip-resistant.

4. Die (1) according to one of the preceding claims, **characterized in that** the roller element (21) or the axis of the roller element (21) is drive-connected to the measured value encoder (26).

5. Die (1) according to one of the preceding claims, **characterized in that** one roller element (21) is arranged on each of both sides of the V-shaped groove (7) inside the die (1).

6. Die (1) according to one of the preceding claims, **characterized in that** the roller element (21) is designed as angle sensor (29).

7. Die (1) according to one of the preceding claims, **characterized in that** the roller element (21) is drive-connected to the angle sensor (29) via a worm drive.

8. Method for bending workpieces (3) between a die (1) comprising a V-shaped groove (7) and a bending punch (5) of a bending press, in particular press brake, which bending punch can be adjusted relative to the die, and a measuring device (20) for a continuous determination of an angle (19) between legs (37, 38) of the workpiece (3) during an adjusting process of the bending punch (5) from a first position in which the bending punch (5) is placed on the workpiece (3) and a second position in which the bending punch (5) engages the V-shaped groove (7) of the die (1) and the workpiece (3) is deformed to have an angle, and the measuring device (20) is arranged inside the die and has at least one detection means (24) and one measured value encoder (26) for determining a change of position of a workpiece portion relative to a reference position on the die during the adjusting process of the bending punch (5), and actual position data are compared to angle-related target position data stored in a data memory (57) of the control device (36) and depending on the target-actual comparison in a processor (58) of the control device (36) control signals are generated and transmitted to a drive device (59) of the bending press for the bending punch (5) to be displaced into the second position until the target-actual data are balanced, and the detection means (24) is formed from a roller element (21) which together with a roller area (31) forms a section of the feed opening (22) of the V-shaped groove (7), **characterized in that** an angle sensor (29) is associated with the roller element (21) as measured value encoder (26) and a rotary movement of the roller element (21) around a rotation angle (34) is detected by the angle sensor (29) and transmitted as measurement value to a control device (36) of the bending press via a line (35).

9. Method according to claim 8, **characterized in that** after the target data corresponds to the actual data, a relief phase determined in terms of its time period, in which the application of load by the bending punch (5) onto the workpiece (3) is interrupted, is performed, and subsequently, another target-actual-comparison is carried out and a deviation of the actual data from the target data due to the workpiece springing back is taken into account by generating a correction factor for the target-actual data, and depending on a target-actual-comparison control signals are generated by the processor (58) of the control device (36) using the new target data determined in accordance with the correction factor and transmitted to a drive device (59) of the bending press for the bending punch (5) to be adjusted into the second position until the actual data correspond to the corrected target data.

## Revendications

1. Matrice à plier (1) pour une presse à plier, en particulier une presse plieuse, comportant un pied (6) destiné à être bloqué dans un porte-outil (2) d'une poutre de la presse à plier, et comportant une tête (8) munie d'une rainure en V (7) et formant une surface d'appui (4) pour une pièce à plier (3), et comportant un dispositif de mesure (20) pour déterminer un angle (19) entre les branches (37, 38) de la pièce à plier (3), ledit dispositif de mesure (20) étant formé par au moins un moyen de détection (24), disposé dans la zone d'une coulisse d'introduction (22) de la rainure en V (7), et au moins un capteur de mesure (26), relié par des lignes à un dispositif de commande (36) de la presse à plier, pour les données réelles d'une variation de position d'une zone de la pièce à plier par rapport à la matrice à plier (1), et ledit moyen de détection (24) est formé par un élément à rouleaux (21) formant une surface de roulement (31) d'une zone partielle de la coulisse d'introduction (22) de la rainure en V (7), **caractérisée en ce qu'**un capteur d'angle de rotation (29) en tant que capteur de mesure (26) est associé à l'élément à rouleaux (21).

2. Matrice à plier (1) selon la revendication 1, **caractérisée en ce que** l'élément à rouleaux (21) est monté dans la tête (8) de la matrice, de manière à pouvoir tourner autour d'un axe orienté parallèlement à un plan de pliage (10).

3. Matrice à plier (1) selon l'une quelconque des revendications précédentes, **caractérisée en ce que** l'élément à rouleaux (21) ou la surface de roulement (31) de l'élément à rouleaux est réalisée de manière antidérapante.

4. Matrice à plier (1) selon l'une quelconque des revendications précédentes, **caractérisée en ce que** l'élément à rouleaux (21) ou l'axe de l'élément à rouleaux (21) est relié en entraînement avec le capteur de mesure (26).

5. Matrice à plier (1) selon l'une quelconque des revendications précédentes, **caractérisée en ce que** respectivement un élément à rouleaux (21) est agencé dans la matrice à plier (1) de part et d'autre de la rainure en V (7).

6. Matrice à plier (1) selon l'une quelconque des revendications précédentes, **caractérisée en ce que** l'élément à rouleaux (21) est réalisé sous la forme d'un capteur d'angle de rotation (29).

7. Matrice à plier (1) selon l'une quelconque des revendications précédentes, **caractérisée en ce que** l'élément à rouleaux (21) est relié en entraînement avec le capteur d'angle de rotation (29) par l'intermédiaire d'une transmission à vis sans fin.

8. Procédé permettant de plier des pièces (3) entre une matrice à plier (1) munie d'une rainure en V (7) et un poinçon de formage (8), apte à être déplacé par rapport à ladite matrice, d'une presse à plier, en particulier une presse plieuse, et comportant un dispositif de mesure (20) pour déterminer en continu un angle (19) entre les branches (37, 38) de la pièce à plier (3) pendant un processus de déplacement du poinçon de formage (5) à partir d'une première position, dans laquelle le poinçon de formage (5) est posé sur la pièce à plier (3), et d'une deuxième position, dans laquelle le poinçon de formage (5) est engagé dans la rainure en V (7) de la matrice à plier (1) et dans laquelle la pièce à plier (3) est pliée en angle, ledit dispositif de mesure (20) étant disposé dans la matrice à plier (1) et comportant au moins un moyen de détection (24) et un capteur de mesure (26) destiné à détecter une variation de position d'une zone de la pièce à plier par rapport à une position de référence sur la matrice à plier pendant le processus de déplacement du poinçon de formage (5), et les données réelles de position étant comparées aux données théoriques de position, définies par référence à l'angle et stockées dans une mémoire de données (57) du dispositif de commande (36), et, en fonction de la comparaison valeurs réelles/valeurs théoriques, des signaux de commande sont générés dans un processeur (58) du dispositif de commande (36) et sont transmis à un dispositif d'entraînement (59) de la presse à plier pour un déplacement du poinçon de formage (5) dans la deuxième position jusqu' à ce que les données réelles soient ajustées aux données théoriques, et le moyen de détection (24) étant formé par un élément à rouleaux (21) formant une surface de roulement (31) d'une zone partielle de la coulisse d'introduction (22) de la rainure en V (7), **caractérisé en ce qu'**un capteur d'angle de rotation (29) en tant que capteur de mesure (26) est associé à l'élément à rouleaux (21) et un mouvement de rotation de l'élément à rouleaux (21) selon un angle de rotation (34) est détecté par le capteur d'angle de rotation (29) et est acheminé en tant que valeur de mesure via une ligne (35) vers un dispositif de commande (36) de la presse à plier.

9. Procédé selon la revendication 8, **caractérisé en ce que**, lorsque les données réelles coïncident avec les données théoriques, il se produit une phase de décharge, qui est définie pour une durée et dans laquelle est interrompue l'application de la force par le poinçon de formage (5) sur la pièce à plier (3), et à la suite de cela est effectuée une nouvelle comparaison entre les données réelles et les données théoriques et, par la formation d'un facteur de correction pour les données théoriques, il est tenu compte d'une divergence des données réelles par rapport aux données théoriques, due à un rebond de la pièce à plier (3), et en fonction d'une comparaison données réelles/données théoriques avec les nouvelles données théoriques déterminées conformément au facteur de correction, des signaux de commande sont générés par le processeur (58) du dispositif de commande (36) et sont acheminés vers un dispositif d'entraînement (59) de la presse à plier pour un déplacement du poinçon de formage (5) dans la deuxième position jusqu'à ce que les données réelles soient ajustées aux données théoriques corrigées.
